(19) **Europäisches Patentamt**

**European Patent Office**

**Office européen des brevets**

(11) **EP 1 405 451 B1**

(12) **EUROPÄISCHE PATENTSCHRIFT**

(45) Veröffentlichungstag und Bekanntmachung des Hinweises auf die Patenterteilung:
**13.10.2004 Patentblatt 2004/42**

(51) Int Cl.$^7$: **H04L 1/00**

(21) Anmeldenummer: 02743213.7

(22) Anmeldetag: **17.06.2002**

(86) Internationale Anmeldenummer:
**PCT/EP2002/006663**

(87) Internationale Veröffentlichungsnummer:
**WO 2003/007528 (23.01.2003 Gazette 2003/04)**

(54) **VERFAHREN ZUR PAKETVERMITTELTEN DATENÜBERTRAGUNG IN EINEM FUNKKOMMUNIKATIONSSYSTEM MIT MEHREREN FUNKZELLEN**

METHOD FOR PACKET-SWITCHED DATA TRANSMISSION IN A MULTI-CELL RADIO COMMUNICATION NETWORK

PROCEDE DE TRANSMISSION DE DONNEES A COMMUTATION PAR PAQUETS DANS UN SYSTEME DE RADIOCOMMUNICATION MULTICELLULAIRE

(84) Benannte Vertragsstaaten:
**DE FR GB**

(30) Priorität: **09.07.2001 DE 10133238**
**09.07.2001 EP 01116583**

(43) Veröffentlichungstag der Anmeldung:
**07.04.2004 Patentblatt 2004/15**

(73) Patentinhaber: **SIEMENS AKTIENGESELLSCHAFT**
**80333 München (DE)**

(72) Erfinder:
- **BALL, Carsten**
  **76764 Rheinzabern (DE)**
- **IVANOV, Kolio**
  **81369 München (DE)**
- **STARK, Thomas**
  **81476 München (DE)**

(56) Entgegenhaltungen:
**EP-A- 0 845 916**      **WO-A-00/49760**
**WO-A-01/26236**      **WO-A-99/12304**

**Beschreibung**

Funkkommunikationssysteme dienen der Übertragung von Informationen, Sprache oder Daten, mit Hilfe von elektromagnetischen Wellen über eine Funkschnittstelle, auch Luftschnittstelle genannt, zwischen einer sendenden und einer empfangenden Funkstation. Ein Beispiel für ein Funkkommunikationssystem ist das bekannte GSM-Mobilfunknetz, dessen Architektur zum Beispiel in B. Walke, "Mobilfunknetze und ihre Protokolle", Band 1, Teubner-Verlag Stuttgart, 1998, Seite 139 bis 151 und Seite 295 bis Seite 311, beschrieben ist. Dabei ist zur Übertragung eines Teilnehmersignals jeweils ein durch einen schmalbandigen Frequenzbereich und einen Zeitschlitz gebildeter Kanal vorgesehen. Da sich ein Teilnehmersignal in einem Kanal in Frequenz und Zeit von den übrigen Teilnehmersignalen unterscheidet, kann die empfangende Funkstation eine Detektion der Daten des Teilnehmersignals vornehmen. In neueren Funkkommunikationssystemen, wie zum Beispiel dem UMTS-System, werden die einzelnen Teilnehmer darüber hinaus durch unterschiedliche Spreizcodes unterschieden.

Ein Funkkommunikationssystem, zum Beispiel ein GSM-Mobilfunknetz, umfasst eine Vielzahl von Mobilvermittlungsstellen (MSC), die untereinander vernetzt sind, und die den Zugang zu einem Festnetz herstellen. Ferner sind diese Mobilvermittlungsstellen mit mindestens einer Basisstationssteuerung (Base Station Controller, BSC) verbunden. Die Basisstationssteuerung ermöglicht eine Verbindung zu mindestens einer Basisstation (Base Transceiver Station, BTS) und nimmt die Verwaltung der funktechnischen Ressourcen der angeschlossenen Basisstationen vor. Eine solche Basisstation ist eine Funkstation, die über eine Funkschnittstelle eine Nachrichtenverbindung zu Mobilstationen aufbauen kann.

Aus WO 99/12304A1 ist ein Verfahren zur Auswahl einer Kombination aus Modulationsschema und Kanalkodierschema in einem digitalen Kommunikationssystem bekannt. Dabei werden seitens einer Basisstation sogenannte link quality parameters" für eine Vielzahl möglicher Kombinationen aus Modulation und Kanalkodierung bestimmt. Basierend auf diesen Messungen werden sowohl durchschnittliche Kanalcharakteristiken als auch deren Varianzen errechnet und für eine Datenübertagung eine optimale Kombination aus Modulation und Kanalcodierung ausgewählt.

Ist in dem Funkkommunikationssystem ein Paketdatendienst vorgesehen, wie zum Beispiel GPRS oder auch EGPRS im Rahmen der Weiterentwicklung des GSM-Mobilfunknetzes, so ist die Basisstationssteuerung zur Übertragung von paketvermittelten Daten darüber hinaus mit einem Paketdatendienstknoten (Serving GPRS Support Note) verbunden, der den Zugang zu einem Festdatennetz herstellt. In der Basisstationssteuerung oder evtl. auch in der Basisstation ist eine Paketdatensteuereinheit (Packet Control Unit, PCU) vorgesehen, die die paketvermittelten Daten verwaltet und deren Signalisierung steuert. Ein Operations- und Wartungszentrum realisiert Kontroll- und Wartungsfunktionen für das Mobilfunknetz beziehungsweise für Teile davon.

Bei der paketvermittelten Datenübertragung erfolgt die Datenübertragung für mehrere Teilnehmer über ein- und denselben physikalischen Kanal. Jeder Teilnehmer kann dabei auch mehrere physikalische Kanäle gleichzeitig belegen (multislot Fall). Je Teilnehmer wird ein Paketdatenfluss (temporary block flow, TBF) dabei in zeitlich begrenzte Funkblöcke zerlegt, die übertragen werden. Bei GPRS koennen diese Funkblöcke bei gleicher Laenge (ein Funkblock umfasst 4 bursts alle 20ms) unterschiedliche Nutzlast haben je nach eingestelltem Modulations-/Kodierschema. Dabei werden die zeitlich begrenzten Funkblöcke von unterschiedlichen Teilnehmern (dynamic allocation des medium access-Protokoll MAC) bzw. die zeitlich begrenzten Paketdatenflüsse verschiedener Teilnehmer (fixed allocation des medium access-Protokoll MAC) zeitlich verschachtelt über den Kanal übertragen. Messwerte über die Qualität des Kanals für den einzelnen Teilnehmer sind daher nur während der Übertragung der einzelnen zeitlich begrenzten Funkblöcke des Teilnehmers verfügbar sowie durch periodisch uebertragene Messprotokolle (measurement reports). Diese Messwerte werden zur Einstellung verschiedener Funkparameter verwendet. Als Messwerte dienen die Empfangsfeldstaerke, die Blockfehlerrate, der Interferenzpegel des Kanals sowie die Bitfehlerwahrscheinlichkeit. Bei der Übertragung eines Paketdatenflusses koennen die Funkparameter wie beispielsweise die Sendeleistung sowie das Modulations-/Kodierschema den Kanalbedingungen dynamisch angepasst werden. Bei der Übertragung des nächsten Paketdatenflusses desselben Teilnehmers müssen die Funkparameter neu eingestellt werden.

Aus O. Queseth et al, Algorithms for link adaption in GPRS, 1999 IEEE, ist bekannt, zur Einstellung des Funkparameters Modulations- und Codierschema zu Beginn der Übertragung eines Paketflusses ein Modulations- und Codierschema fest vorzugeben. Anschliessend wird der mittlere C/I-Wert (das ist das Signal-Stör-Verhältnis ) wachrend der Übertragung der Funkblöcke gemessen und das Modulations- und Codierschema entsprechend dieses Wertes angepasst. Die Auswahl des Modulations- und Codierschemas entsprechend der Auslastung des Funksystems, wird als vorteilhaft angesehen.

In diesem bekannten Verfahren wird zu Beginn der Übertragung eines Paketdatenflusses das Modulations- und Codierschema auf einen vorgegebenen Wert eingestellt.

Simulationen zeigen jedoch, dass gerade in typischen ruralen Zellen Teilnehmer nahe der Basisstation sehr hohe Modulations- und Kodierschemas fahren koennen und Teilnehmer am Zellrand nur kleine. Damit ist die feste Voreinstellung des Modulations- und Kodierschemas nicht optimal und verringert die Zellkapazitaet. Wird das Schema zu hoch eingestellt, müssen Teilnehmer am Zellrand einen Grossteil der Daten mehrfach verschicken (sogenannte Retransmissionen), weil die Bloecke als fehlerhaft dekodiert werden. Wird das Schema zu niedrig eingestellt, koennen Teilnehmer nahe an der BTS nicht den optimalen Durchsatz erzielen.

Während der Übertragung wird das verwendete Modulations- und Codierschema in Abhängigkeit einer Messgröße, insbesondere des Träger zu Interferenzverhältnisses (C/I) bzw. der Blockfehlerrate, den aktuellen Funkverhältnissen angepasst. Dieser Anpassungsmechanismus ist träge, da erst mehrere Bloecke uebertragen werden müssen, um eine korrekte Anpassung vornehmen zu können.

Das ist der kritische Punkt. Bei typischen Paketdiensten wie WAP und HTTP werden meist kurz hintereinander im Abstand von wenigen Sekunden Lesezeit Paketdatenfluesse mit Laengen von 10 - 100 Funkblöcken übertragen. Bis eine langsam reagierende Ratenanpassung das bestmögliche Kodierschema eingestellt hat, ist der Paketdatenfluss meist schon zum Grossteil vorüber. Zu Beginn des naechsten Paketdatenflusses wird wieder der fest vorgegebene Wert verwendet.

Der Erfindung liegt daher das Problem zugrunde, ein Verfahren zur paketvermittelten Datenübertragung in einem Funkkommunikationssystem mit mehreren Funkzellen anzugeben, bei dem mindestens ein Funkparameter besser an gegebene Funkverhältnisse angepasst wird.

Dieses Problem wird erfindungsgemäß gelöst durch ein Verfahren gemäß Anspruch 1. Weitere Ausgestaltungen der Erfindung ergeben sich aus den Unteransprüchen.

In dem Verfahren zur paketvermittelten Datenübertragung in einem Funkkommunikationssystem mit mehreren Funkzellen wird ein Paketdatenfluss zwischen einer sendenden Funkstation und einer empfangenden Funkstation in Form von aufeinanderfolgenden, zeitlich begrenzten Funkblöcken übertragen. Für die Übertragung eines ersten zeitlich begrenzten Funkblockes eines ersten Paketdatenflusses wird mindestens ein Funkparameter in Abhängigkeit einer Entfernung - beispielsweise gegeben durch die Vorhaltezeit (Timing Advance) - zwischen der sendenden Funkstation und der empfangenden Funkstation und in Abhängigkeit einer Signalqualität bzw. eines Empfangspegels eines von der sendenden Funkstation gesendeten und der empfangenden Funkstation empfangenen Signals bestimmt. In dem Verfahren wird ausgenutzt, dass innerhalb einer Funkzelle die Funkverhältnisse von der Entfernung zwischen der sendenden Funkstation und der empfangenden Funkstation abhängen. Weitere Einflüsse auf die Funkverhältnisse werden über die Signalqualität des von der sendenden Funkstation gesendeten und der empfangenden Funkstation empfangenen Signals berücksichtigt. Die Signalqualität kann zum Beispiel anhand eines Signal- zu Interferenzverhältnisses oder anhand eines Empfangssignalspegels bewertet werden. Als Signal ist zum Beispiel der sogenannte Access Burst, das heisst, das Signal, mit dem eine sendende Funkstation einer empfangenden Funkstation mitteilt, dass eine Verbindungsaufnahme durchgeführt werden soll, geeignet. Ferner koennen die periodisch von Teilnehmern im idle sowie im transfer Modus gesendeten Mess-Berichte verwendet werden.

Für die Übertragung weiterer zeitlich begrenzter Paketdatenflüsse liegt es im Rahmen der Erfindung, den mindestens einen Funkparameter jeweils in Abhängigkeit der Entfernung zwischen der sendenden Funkstation und der empfangenden Funkstation und der Abhängigkeit der Signalqualität eines von der sendenden Funkstation gesendeten und von der empfangenden Funkstation empfangenen Signals, sowie in Abhängigkeit von einem vorherigen Wert des Funkparameters, bei der Übertragung eines vorherigen zeitlich begrenzten Paketdatenflusses zu bestimmen, sofern der zeitliche Abstand zwischen dem Ende der vorherigen Übertragung und der aktuellen Übertragung eine vorgegebene Maximalzeit, welche z.B. durch einen Timer gesteuert ist, nicht überschreitet. Bei sogenannten "Concurrent" Paketdatenflüssen, d.h. beim Aufbau einer Aufwaertsverbindung waehrend eine Abwaertsverbindung besteht (bzw. umgekehrt) wird vorzugsweise ebenfalls der mindestens eine Funkparameter der bereits bestehenden Verbindung verwendet. Zu diesem Zweck wird vorzugsweise im Netzwerk für jede Teilnehmerstation eine Datenstruktur angelegt, welche den mindestens einen Funkparameter enthaelt und deren Gültigkeit von obigem Timer abhaengt. Bei dieser Vorgehensweise wird angenommen, dass sich die Funkverhältnisse zwischen der vorherigen Übertragung und der aktuellen Übertragung nicht allzu sehr verändert haben. Durch Berücksichtigung des vorherigen Wertes des mindestens einen Funkparameters wird in das Verfahren eine Erinnerungsfunktion eingeführt. Dadurch werden Anpassungen des Funkparameters während des vorherigen zeitlich begrenzten Paketdatenflusses in die aktuelle Übertragung übernommen. Das hat den Vorteil, dass die Erfahrungen aus dem letzten Paketdatenfluss berücksichtigt werden und ein optimaler Wert des Funkparameters schneller eingestellt werden kann.

Vorzugsweise nimmt der Einfluss des vorherigen Wertes des Funkparameters mit zunehmendem zeitlichen Abstand zwischen der letzten Übertragung des vorherigen Paketdatenflusses und des neuen Paketdatenflusses ab. Dadurch wird berücksichtigt, dass sich die Funkverhältnisse mit zunehmendem zeitlichen Abstand zwischen der vorherigen Übertragung und der aktuellen Übertragung zunehmend ändern können, etwa auf Grund einer Bewegung einer der Funkstationen oder auf Grund von Laständerungen in der Zelle durch neuhinzukommende bzw. sich abmeldende Teilnehmer.

Als Funkparameter kommen beispielsweise das Modulations-/Kodierschema, die Parameter fuer die aufwärts und abwärts Leistungsregelung, die Zeitschlitz-Allokierung (Multislots) usw. in Frage. Zusaetzlich abgespeichert werden koennen in der obigen Datenstruktur beispielsweise auch der Empfangspegel und der Signal-Stör-Abstand.

Gemäß einer Ausführungsform der Erfindung wird ein Funkparameter FP bestimmt, für den n Werte mit der Bezeichnung FP-x, x=1,...,n zur Verfügung stehen. Als Beispiel sei als Funkparameter FP das EGPRS Modulations-/ Kodierschema MCS-1,..., MCS-9 bzw. das GPRS Kodierschema CS-1,...,CS-4 genannt. Falls der zeitliche Abstand zwischen dem Ende der Übertragung des vorherigen Paketdatenflusses und der Übertragung des weiteren Paketdatenflusses größer als die Maximalzeit ist, wird dem Funkparameter FP der Wert FP-x zugewiesen mit

$$x=\text{Integer}(a*y+(1-a)*z), \qquad\qquad (1)$$

wobei

a        ein beliebig einstellbarer Gewichtsfaktor mit 0<a<1,

FP-y        ein für die gegebene Entfernung zwischen der sendenden Funkstation und der empfangenden Funkstation vorgegebener Wert für den Funkparameter FP mit Index y und

FP-z        ein für die gegebene Signalqualität bzw. Empfangspegel eines von der sendenden Funkstation gesendeten und von der empfangenden Funkstation empfangenen Signals vorgegebener Wert für den Funkparameter FP mit Index z ist.

Falls der zeitliche Abstand zwischen dem Ende der Übertragung des vorherigen Funkblocks und der Übertragung des weiteren Funkblocks geringer als die Maximalzeit T_max_last ist, wird dem Funkparameter der Wert FP-x zugewiesen mit

$$x=\text{Integer}(b*y+c*z+d*(w-y)*T/T\_max\_last), \qquad\qquad (2)$$

wobei

b, c, d        beliebig einstellbare Gewichtsfaktoren sind mit b+c+d=1 und 0<b,c,d<1,

FP-y        ein für die gegebene Entfernung zwischen der sendenden Funkstation und der empfangenden Funkstation vorgegebener Wert für den Funkparameter ist,

FP-z        ein für die gegebene Signalqualität bzw. Empfangspegel eines von der sendenden Funkstation gesendeten und von der empfangenden Funkstation empfangenen Signals vorgegebener Wert für den Funkparameter ist,

FP-w        der vorherige Wert des Funkparameters beim Ende des letzten Paketdatenflusses ist,

T        der zeitliche Abstand zwischen dem Ende der Übertragung des vorherigen zeitlich begrenzten Paketdatenflusses und der Übertragung des neuen zeitlich begrenzten Paketdatenflusses ist.

Es liegt im Rahmen der Erfindung, dass die verwendeten Gewichtsfaktoren zeitlich abhängig sind bzw. sein können. Das hat den Vorteil, dass der Einfluss der verschiedenen Randbedingungen, zum Beispiel der Entfernung zwischen sendender und empfangender Funkstation oder der Signalqualität mit zunehmender Dauer des Abstandes vom letzten Paketdatenfluss zum neuen Paketdatenfluss unterschiedlich sein kann. Damit kann zum Beispiel dem Einfluss des vorherigen Wertes ein höheres Gewicht als dem Einfluss der Signalqualität des Access Burstes gegeben werden, bei zunehmender Dauer der idle Zeit zwischen zwei aufeinanderfolgenden Paketdatenflüssen. Ferner kann anstelle des linearen Zusammenhangs in Gleichung 1 auch eine beliebig andere Funktionalität erzeugt werden.

Zusaetzlich können auch die Parameter a,b,c und d in Gleichung 1 bzw. 2 zeitlich variabel sein und sich automatisch den optimalen Verhältnissen in einer Zelle anpassen.

Vorzugsweise wird am Ende der Übertragung jedes zeitlich begrenzten Paketdatenflusses der aktuelle Wert des Funkparameters in Abhängigkeit der momentanen Entfernung zwischen der sendenden Funkstation und der empfangenden Funkstation fuer jeden Teilnehmer gespeichert und es werden beispielsweise entsprechende Mittelwerte berechnet. Dabei wird jeweils aus dem aktuellen Wert des Funkparameters und dem gespeicherten vorgegebenen Wert des Funkparameters ein neuer vorgegebener Wert des Funkparameters für die gegebene Entfernung zwischen der sendenden Funkstation und der empfangenden Funkstation berechnet und gespeichert. Auf diese Weise wird der für die gegebene Entfernung zwischen der sendenden Funkstation und der empfangenden Funkstation vorgegebene Wert des Funkparameters aktualisiert und an die funktechnischen Gegebenenheiten angepasst. Damit bildet sich automatisch fur jede Zelle ein entfernungsabhängiges Profil des mindestens einen Funkparameters aus, welches bei neu beginnenden zeitlich begrenzten Paketdatenflüssen sofort eine zelltypische, bestmögliche Einstellung erlaubt.

Desgleichen kann am Ende eines Paketdatenflusses auch ein Update der Parameter a,b,c und d erfolgen, je nachdem welcher Parameterwert am Anfang des Paketdatenflusses die bestmögliche Schätzung des Endzustandes des Funkparameters am Ende des Paketdatenflusses erzielt hätte.

Dabei ist es besonders vorteilhaft, den neuen vorgegebenen Wert des Funkparameters durch Mittelwertbildung aus dem aktuellen Wert des Funkparameters und dem gespeicherten vorgegebenen Wert des Funkparameters zu berechnen. Die Mittelwertbildung ist mit geringem Rechenaufwand durchführbar.

Vorzugsweise wird bei der Bestimmung des Funkparameters zusätzlich berücksichtigt, in welcher Art von Funkzelle sich die sendende Funkstation und/oder die empfangende Funkstation befindet. Dadurch werden die unterschiedlichen funktechnischen Gegebenheiten, zum Beispiel im dicht oder weniger dicht bebauten Gebiet, bergigem Terrain oder auf einem offenen Gelände berücksichtigt.

Die Verwaltung der Werte für den mindestens einen Funkparameter erfolgt vorzugsweise in einem Operations- und Wartungszentrum des Funkkommunikationssystems.

Als Funkparameter, der nach diesem Verfahren bestimmt wird, ist sowohl ein Modulations und Codierschema als auch ein Parameter zur Sendeleistungsregelung, ein Parameter zur Steuerung einer richtungsselektiven Antenne und/oder einer adaptiven Antenne und/oder ein netzwerkgesteuertes Messprotokoll zur Neuauswahl von Funkzellen geeignet.

Während der Übertragung eines zeitlich begrenzten Paketdatenflusses wird die empfangende Funkstation von der sendenden Funkstation durch sogenanntes "Polling" aufgefordert, Messwerte (beispielsweise die Blockfehlerrate, Empfangspegel, Interferenzpegel, etc.) zu senden, die die Qualität des empfangenen Datenflusses widerspiegeln. Zusaetzlich koennen periodische Mess-Berichte von der Teilnehmerstation an das Netzwerk angefordert werden. Anhand dieser Messwerte wird der mindestens eine Funkparameter an aktuelle Funkverhältnisse angepasst. Vorzugsweise ist der Abstand, zwischen zwei aufeinander folgenden Anforderungen zur Übersendung eines Messwertes nicht konstant. Vorzugsweise nimmt der Abstand zwischen aufeinander folgenden Anforderungen von kleinen Werten zu Beginn des Datenflusses ausgehend mit zunehmender Dauer des zeitlich begrenzten Funkblocks zu. Dadurch wird gerade zu Beginn des Datenflusses eine beschleunigte Anpassung des Funkparameters an die funktechnischen Gegebenheiten erzielt.

Im Folgenden wird die Erfindung anhand eines Ausführungsbeispiels und der Figuren näher erläutert.

Figur 1 zeigt die Einstellung und Anpassung des Modulationsund Codierschemas während der Übertragung dreier aufeinander folgender zeitlich begrenzter Paketdatenflüsse (TBFs), die jeweils aus mehreren Funkblöcken bestehen..

Figur 2 und Figur 3 zeigt Beispiele für die zeitliche Verteilung von Anforderungen für Messsignale zur Bewertung der Qualität einer Funkverbindung.

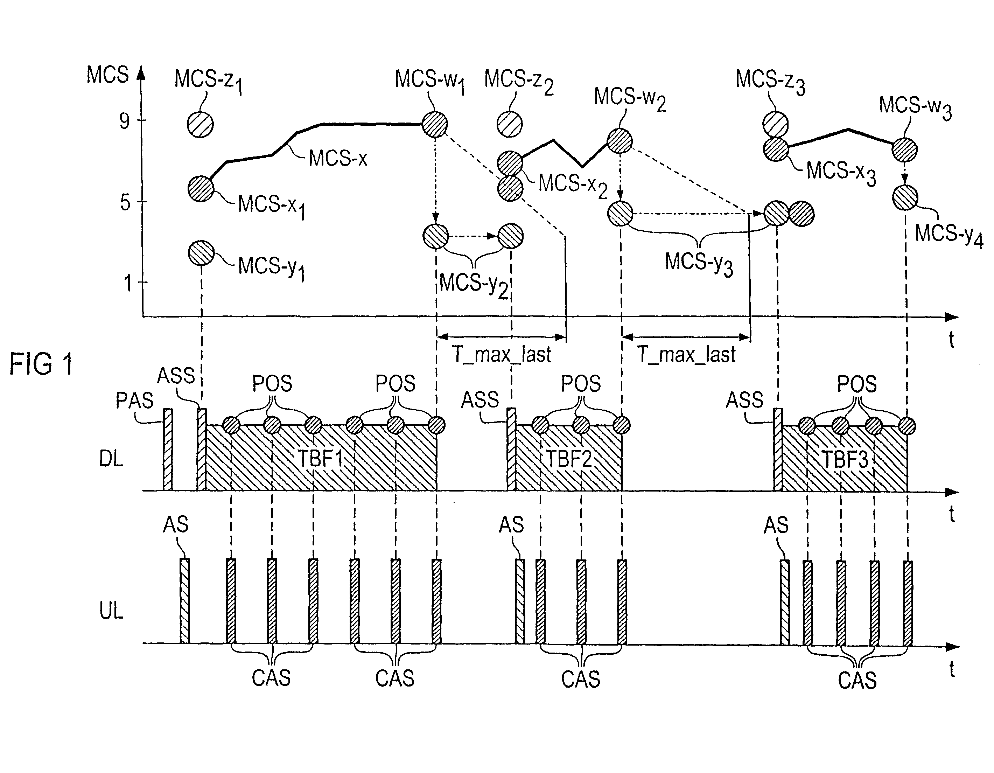

Zur paketvermittelten Datenübertragung in einem Funkkommunikationssystem, das zum Beispiel nach dem GPRS bzw. EGPRS-Standard arbeitet, wird eine Paketdatenübertragung in zum Beispiel drei aufeinander folgenden, zeitlich begrenzten Paketdatenflüssen TBF1, TBF2, TBF3 übertragen (siehe Figur 1), die wiederum aus mehreren Funkblöcken bestehen. Die Datenübertragung erfolgt zum Beispiel von einer Basisstation als sendender Funkstation zu einer Mobilstation als empfangender Funkstation oder umgekehrt. Dabei wird die Senderichtung von der Basisstation zur Mobilstation als Abwärtsrichtung, auch Down Link, DL bezeichnet. Die Senderichtung von der Mobilstation zur Basisstation wird als Aufwärtsrichtung, auch Up Link, UL bezeichnet.

Zu Beginn der Funkverbindung sendet die Basisstation ein Funkrufsignal PAS, auch Pagingsignal genannt. Daraufhin antwortet die Mobilstation mit einem Anforderungssignal AS, auch Accesssignal genannt, zum Aufbau einer Funkverbindung. Die Basisstation ordnet der Mobilstation mit Hilfe eines Zuordnungssignals ASS in einem sogenannten Assignment einen Verkehrskanal zu. Daraufhin beginnt die Übertragung eines ersten zeitlich begrenzten Paketdatenflusses TBF1. Für die Übertragung wird ein Anfangswert MCS-$x_1$ für ein Modulations- und Codierschema bestimmt nach folgender Vorschrift:

$$MCS\text{-}x_1 \text{ mit } x_1 = \text{Integer } (a^*y_1 + (1-a)z_1). \tag{3}$$

Dabei ist MCS-$y_1$ ein Wert für das Modulations- und Codierschema, der für die gegebene Entfernung zwischen der Mobilstation und der Basisstation vorgegeben ist. Die gegebene Entfernung zwischen der Mobilstation und der Basisstation ist zum Beispiel über den Zeitvorhalt, auch Timing Advance genannt, parametrisiert. Der Wert MCS-$z_1$ für das Modulationsund Codierschema ist in Abhängigkeit der Signalqualität/Empfangspegel des Zugangssignals AS vorgegeben, a ist ein Gewichtsfaktor mit einem Wert zwischen 0 und 1, der zum Beispiel im Operations- und Wartungszentrum des Funkkommunikationssystems gespeichert ist.

Während der Übertragung des ersten zeitlich begrenzten Funkblocks TBF1 werden von der Basisstation regelmäßig Anforderungen an die Mobilstation gesandt, ein Messsignal über die Qualität der Datenübertragung zu übermitteln. Dieser Vorgang wird als Polling bezeichnet. Die Basisstation sendet jeweils ein Pollingsignal POS an die Mobilstation, auf das die Mobilstation mit einem Control Acknowledgment-Signal CAS antwortet. Das Control Acknowledgment-Signal CAS gibt an, welcher Prozentsatz an Paketdaten als lesbar empfangen wurde sowie macht Angaben über Empfangspegel und Interferenzlevel am Ort der Teilnehmerstation. Es stellt somit ein Maß für die Qualität der Funkverbindung dar. Anhand dieser Messgröße wird der aktuelle Wert MCS-x des Modulations- und Codierschemas von dem Anfangswert MCS-$x_1$ angepasst. Bei guter Qualität der Funkverbindung wird ein höheres Modulations- und Codierschema, bei dem $x>x_1$ ist, zugewiesen. Dieser Vorgang wiederholt sich über die gesamte Dauer des zeitlich begrenzten Funkblocks TBF1. Am Ende der Übertragung weist das Modulations- und Codierschema einen ersten Endwert MCS-$w_1$ auf.

Die Übertragung eines zweiten zeitlich begrenzten Paketdatenflusses TBF2 wird wiederum durch ein Zuordnungssignal ASS der Basisstation an die Mobilstation eingeleitet. Die Mobilstation antwortet wiederum mit einem Zugangssignal AS bzw. mit einem control acknowledge bestehend aus Access-Signalen. Da der zeitliche Abstand zwischen dem Ende der Übertragung des ersten zeitlich begrenzten Paketflusses TBF1 und dem Beginn der Übertragung des zweiten zeitlich begrenzten Paketflusses TBF2 kleiner einer Maximalzeit T_max_last ist, wird ein zweiter Startwert MCS-$x_2$ für das Modulations- und Codierschema nach folgender Vorschrift bestimmt:

$$\text{MCS-}x_2 \text{ mit } x_2 = \text{Integer}(b*y_2 + c*z_2 + d*(w_1 - (w_1 - y_2)*T/T\_max\_last). \tag{4}$$

Dabei ist $y_2$ durch den Wert MCS-$y_2$ bestimmt, der durch Mittelung aus dem Endwert MCS-$w_1$ für das Modulations- und Codierschema und dem im System vorgegebenen, von der Entfernung zwischen der Mobilstation und der Basisstation abhängigen Wert MCS-$y_1$ gewonnen wird. $z_2$ bestimmt sich aus dem Wert MCS$z_2$ für das Modulationsschema, der von der Signalqualität des Zuordnungssignals AS für den zweiten zeitlich begrenzten Funkblock TBF2 abhängt. b, c, d sind Gewichtsfaktoren, deren Summe gleich 1 ist und die jeweils zwischen 0 und 1 liegen.

Während der Übertragung des zweiten zeitlich begrenzten Paketflusses TBF2 werden wiederum von der Basisstation Pollingsignale POS zur Mobilstation gesendet, die diese mit Control Acknowledgement-Signale CAS beantwortet.

Aus dem Control Acknowledgement-Signalen CAS wird wiederum eine Anpassung des aktuellen Wertes MCS-x des Modulations- und Codierschemas MCS an die aktuellen Funkverhältnisse abgeleitet. Verbessern sich die Funkbedingungen, so wird der Wert x vergrößert, verschlechtern sich die Funkbedingungen, so wird der Wert x verkleinert.

Am Ende der Übertragung des zweiten zeitlich begrenzten Funkblockes TBF2 wird ein zweiter Endwert für das Modulations- und Codierschema MCS-$w_2$ erreicht, aus dem durch Mittelwertbildung ein neuer, von der Entfernung zwischen der Basisstation und der Mobilstation abhängiger Wert MCS-$y_3$ bestimmt wird.

Die Übertragung eines dritten zeitlich begrenzten Paketdatenflusses TBF3 wird wiederum durch ein Zuordnungssignal ASS der Basisstation an die Mobilstation eingeleitet. Da der zeitliche Abstand zwischen dem Zuordnungssignal ASS und dem Ende der Übertragung des zweiten zeitlich begrenzten Paketdatenflusses TBF2 größer als die Maximalzeit T_max_last ist, wird der dritte Startwert MCS-$x_3$ für das Modulations- und Codierschema MCS nach folgender Vorschrift bestimmt:

$$\text{MCS-}x_3 \text{ mit } x_3 = \text{Integer } (a*y_3 + (1-a)z_3). \tag{5}$$

Dabei bestimmt sich $z_3$ aus dem Wert MCS-$z_3$ für das Modulations- und Codierschema MCS, der in Abhängigkeit der Signalqualität des Zugangssignales AS für den dritten zeitlich begrenzten Funkblock TBF3 vorgegeben ist. Während der Übertragung des dritten zeitlich begrenzten Funkblockes TBF3 wird wiederum mit Hilfe von Pollingsignalen POS der Basisstation und Control Acknowledgement-Signalen CAS der Mobilstation eine Anpassung des aktuellen Wertes MCS-x des Modulations- und Codierschemas MCS vorgenommen. Aus dem dritten Endwert MCS-w3 tritt wiederum durch Mittelwertbildung ein aktualisierter Wert MCS$y_4$, der für die gegebene Entfernung zwischen Mobilstation und Basisstation verwendet wird, ermittelt.

Die Mittelwertbildung erfolgt zum Beispiel in einer Paketdatensteuereinheit (auch Packed Control Unit genannt) in der Basisstationssteuerung (auch Base Station Controller genannt). Dazu wird für jede Funkzelle eine Tabelle angelegt, die für jede Mobilstation MS1, MS2 unter anderem folgende Informationen enthält:

| Kennung der Mobilstation TLLI | UL_TBF | DL_TBF | MCS_UL | MCS_DL | Rahmennummer des zuletzt gesendeten, zeitlich begrenzten Paketdatenflusses | Modulations- und Codier-schema des zuletzt gesendeten, zeitlich begrenzten Paketdatenflusses |
|---|---|---|---|---|---|---|
| TLLI_MS1 | Nein | ja | - | MSC-8 | Tend = FN1 | MCS-5 |

(fortgesetzt)

| Kennung der Mobilstation TLLI | UL_TBF | DL_TBF | MCS_UL | MCS_DL | Rahmennummer des zuletzt gesendeten, zeitlich begrenzten Paketdatenflusses | Modulations- und Codier-schema des zuletzt gesendeten, zeitlich begrenzten Paketdatenflusses |
|---|---|---|---|---|---|---|
| TLLI_MS2 | Ja | ja | MCS-5 | MCS-5 | Void | void |

Als Kennung der Mobilstation ist zum Beispiel die 32 Bit TLLI-Kennung (Temporary Logical Link Identifier) geeignet, die aus der internationalen Mobilteilnehmeridentität IMSI ableitbar ist. In der Spalte DL_TBF wird vermerkt, ob in Abwärtsrichtung ein zeitlich begrenzter Paketdatenfluss gesendet wird oder nicht. In der Spalte UL_TBF wird vermerkt, ob in Aufwärtsrichtung ein zeitlich begrenzter Paketdatenfluss gesendet wird. Die Spalte MCS_DL enthält das in Abwärtsrichtung verwendete Modulations- und Codierschema. Die Spalte MCS_UL enthält das in Aufwärtsrichtung verwendete Modulations- und Codierschema. Der Eintrag Tend = FN1 steht für den Endzeitpunkt des letzten Paketdatenflusses, gekennzeichnet z.B. durch die TDMA-Frame-Nummer FN1. Zusaetzlich ist das gültige Kodierschema am Ende des letzten Paketdatenflusses gespeichert.

Um zu vermeiden, dass die Tabelle zuviel Speicherplatz in der Paketdatensteuerungseinheit PCU benötigt, können die Spalten gelöscht werden, sofern der zuletzt gesendete zeitlich begrenzte Funkblock einer Mobilstation vor einer Zeit, die größer ist als eine Zurücksetzungszeit T_DELETE, geendet hat. Für T_DELETE können zum Beispiel 20-60 Sekunden oder auch 5 Minuten eingesetzt werden. UMTS Verkehrsmodelle für HTTP-Verkehr haben gezeigt, dass die mittlere Lesezeit zwischen dem Download zweier Seiten ca. 40 Sekunden dauert. Der Timer T_Delete sollte daher in diesen Grössenordnungen einstellbar sein.

Das Ausführungsbeispiel wurde anhand des Funkparameters Modulations- und Codierschema beschrieben. Es lässt sich ohne Weiteres auf die Funkparameter Sendeleistungsregelung (Power Control), Steuerung einer richtungsselektiven Antenne und/oder einer adaptiven Antenne (Smart Antenna/Switch Beam Control) oder netzwerkgesteuerte Neuauswahl von Funkzellen (Network Control Cell Reselection) übertragen. Desweiteren kann bei der Einführung der Ortsbestimmungsdienste (Location Services) auch der Ort des Teilnehmers zwischengespeichert werden. Dazu muss die obige Tabelle durch entsprechende weitere Einträge ergänzt werden.

Im Fall der Sendeleistungssteuerung wird in der Paketdatensteuerungseinheit die abschließende Sendeleistungseinstellungen des zuletzt gesendeten Funkblocks des letzten zeitlich begrenzten Paketdatenflusses der Mobilstation in Aufwärtsrichtung sowie der Basisstation in Abwärtsrichtung gespeichert. Bei der Übertragung des nächsten zeitlich begrenzten Funkblocks eines neuen Paketdatenflusses kann diese Endeinstellung verwendet werden oder es kann in Abhängigkeit der verstrichenen Zeit ein Sendeleistungswert aus der Endeinstellung und einer maximalen Sendeleistung berechnet werden. Damit muss das Netzwerk bzw. die Teilnehmerstation nicht mit maximaler Sendeleistung zu Beginn des Paketdatenflusses starten und warten, bis geeignete Messwerte zur Sendeleistungsreduzierung vorliegen. Das macht die Leistungsregelung effizienter und erhöht die Zellkapazität.

Im Fall der Steuerung einer richtungsselektiven oder adaptiven Antenne kann die Endrichtungsinformation der Mobilstation in der Zelle während des zuletzt gesendeten zeitlich begrenzten Funkblocks des letzten Paketdatenflusses gespeichert werden. Ist die Richtung des Zugangssignals und die Richtung des ersten empfangenen Funkblocks beim nächsten zeitlich begrenzten Funkblock eines neuen Paketdatenflusses ähnlich der gespeicherten alten Richtungsinformation, so kann das Funknetz sofort in dieselbe Richtung senden, ohne langwierige Richtungsmessungen durchführen zu müssen.

Die netzwerkgesteuerte Neuauswahl von Funkzellen basiert auf Messdaten, die von der Mobilstation zur Basisstation während eines zeitlich gesendeten Paketdatenflusses in einem Netzwerkprotokoll (Network Controlled Cell Reselection, Measurement Report) gesendet werden. Es wird der Empfangspegel der Zelle sowie der Nachbarzellen und auch der Interferenzpegel am Ort der Teilnehmerstation übertragen. In dem Netzwerk werden diese Werte pro Teilnehmer gespeichert oder es wird ein Mittelwert gebildet, der sich auf Messungen über mehrere zeitlich begrenzte Funkblöcke in einem periodischen Messzeitraum bezieht. Damit kann das Netzwerk entscheiden, ob der Teilnehmer im Fall von Kapazitätsengpässen in der jetzigen Zelle in eine Nachbarzelle verschoben werden soll. Desgleichen gilt im Fall von Nachbarzellen, in denen die Verbindung besser als zur jetzigen Zelle ist. In der Tabelle können die Messwerte gespeichert werden, so dass das Netzwerk über einen längeren Zeitraum über die Verbindungsqualität zum Teilnehmer informiert ist. Ausserdem werden evtl. Zellwechsel und deren Grund (Signalpegel, Kapazität, etc.) gespeichert.

Diese Messergebnisse koennen auch in den Gleichungen (1)bis (4) als Eingangsparameter verwendet werden.

Bei den Ortsbestimmungsdiensten (Location Services) wird die Position des Teilnehmers mittels standardisierter Verfahren ermittelt, beispielsweise ueber Signallaufzeiten zu mehreren Basisstationen im Funkbereich des Teilnehmers. Dieser Positions-Wert wird ebenfalls periodisch ermittelt und zwischengespeichert, um Anfragen (location request) von nachfolgenden Netzeinheiten zur Position eines Teilnehmers schnell befriedigen zu können.

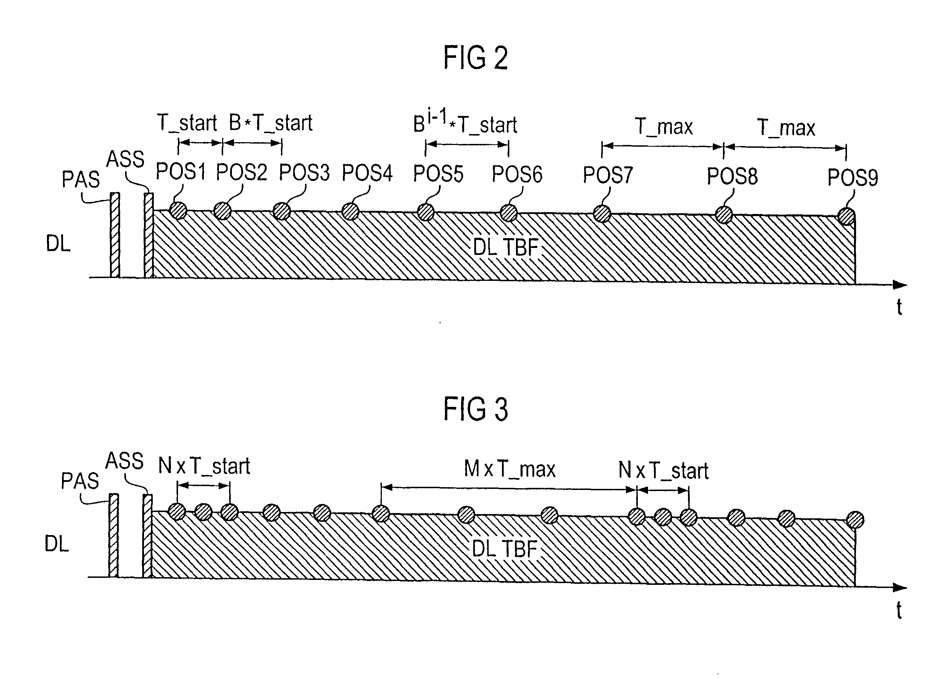

Der zeitliche Abstand zwischen aufeinanderfolgenden Pollingsignalen während der Übertragung eines zeitlich begrenzten Paketdatenflusses kann unterschiedlich eingestellt werden. Gemäß einem Ausführungsbeispiel (siehe Figur 2) beträgt der zeitliche Abstand zwischen einem ersten Pollingsignal POS1 und einem zweiten Pollingsignal POS2 T_Start. Die darauf folgenden Pollingsignale POSi folgen mit zunehmenden zeitlichen Abständen, für die beispielsweise gilt:

$$T=B^{i-1}*T\_start \tag{6}$$

Dabei ist T der zeitliche Abstand zwischen benachbarten Pollingsignalen i und i+1 und B ein konstanter, frei wählbarer Faktor. Sobald der zeitliche Abstand zwischen benachbarten Pollingsignalen POSi, POSi+1 einen Maximalwert T_max erreicht hat, wird dieser beibehalten.

In einem weiteren Ausführungsbeispiel (siehe Figur 3) werden die ersten N Pollingsignale POS in einem konstanten Zeitabstand T_start gesendet. Anschließend wird der zeitliche Abstand zwischen aufeinander folgenden Pollingsignalen POS entsprechend einem exponentiellen Gesetz vergrößert:

$$T=B^{i-1}*T\_start, \tag{7}$$

wie anhand der Figur 2 erläutert. Bei Erreichen eines Maximalwerts T_max für den zeitlichen Abstand werden die folgenden M Pollingsignale jeweils im zeitlichen Abstand T_max gesendet. Danach wird der zeitliche Abstand aufeinander folgender Pollingsignale für die nächsten N Pollingsignale wiederum auf den Startwert T_start gesetzt. Diese zeitliche Verteilung der Pollingsignale POS eignet sich besonders zur Einstellung von richtungsselektiven/adaptiven Antennen.

**Patentansprüche**

1. Verfahren zur paketvermittelten Datenübertragung in einem Funkkommunikationssystem mit mehreren Funkzellen,

   - bei dem ein Paketdatenfluss zwischen einer sendenden Funkstation und einer empfangenden Funkstation in Form von aufeinander folgenden, zeitlich begrenzten Funkblöcken übertragen wird,
   - bei dem für die Übertragung eines ersten zeitlich begrenzten Funkblockes mindestens ein Funkparameter in Abhängigkeit einer Signalqualität eines von der sendenden Funkstation gesendeten und der empfangenden Funkstation empfangenen Signals bestimmt wird,

   **dadurch gekennzeichnet,**

   - **dass** für die Übertragung des ersten Funkblockes der mindestens eine Funkparameter zusätzlich in Abhängigkeit einer Entfernung zwischen der sendenden Funkstation und der empfangenden Funkstation bestimmt wird,
   - **dass** für die Übertragung weiterer Paketdatenflüsse mit weiteren zeitlich begrenzten Funkblöcken die Bestimmung des mindestens einen Funkparameters jeweils in Abhängigkeit der Entfernung zwischen der sendenden Funkstation und der empfangenden Funkstation und in Abhängigkeit der Signalqualität eines von der sendenden Funkstation gesendeten und von der empfangenden Funkstation empfangenen Signals und in Abhängigkeit von einem vorherigen Wert des Funkparameters bei der Übertragung eines vorherigen zeitlich begrenzten Funkblocks eines vorherigen Paketdatenflusses bestimmt wird, sofern der zeitliche Abstand zwischen dem Ende der vorherigen Übertragung und der aktuellen Übertragung eine vorgegebene Maximalzeit nicht überschreitet, und
   - **dass** der Einfluss des vorherigen Wertes des Funkparameters mit zunehmendem zeitlichen Abstand zwischen der Übertragung des vorherigen Funkblocks des vorherigen Paketdatenflusses und des weiteren Funkblocks des neuen Paketdatenflusses abnimmt.

**2.** Verfahren nach Anspruch 1, **dadurch gekennzeichnet, dass** die Abnahme des Einflusses des vorherigen Wertes mittels einer mathematischen Gleichung beschreibbar ist.

**3.** Verfahren nach Anspruch 2, **dadurch gekennzeichnet,**

- **dass** für den Funkparameter n Werte mit der Bezeichnung FP-x, x=1,...,n zur Verfügung stehen,
- **dass**, falls der zeitliche Abstand zwischen dem Ende der Übertragung des vorherigen Funkblocks des letzten Paketdatenflusses und der Übertragung des weiteren Funkblocks des neuen Paketdatenflusses größer als die Maximalzeit ist, dem Funkparameter der Wert FP-x mit x

$$x=Integer(a*y+(1-a)*z)$$

zugewiesen wird, wobei
a ein Gewichtsfaktor mit 0>a>1,
FP-y ein für die gegebene Entfernung zwischen sendender Funkstation und empfangender Funkstation vorgegebener Wert für den Funkparameter und
FP-z ein für die gegebene Signalqualität eines von der sendenden Funkstation gesendeten und von der empfangenden Funkstation empfangenen Signals vorgegebener Wert für den Funkparameter ist, und
- **dass**, falls der zeitliche Abstand zwischen dem Ende der Übertragung des vorherigen Funkblocks und der Übertragung des weiteren Funkblocks geringer als die Maximalzeit ist, dem Funkparameter der Wert FP-x mit

$$x=Integer(b*y+c*z+d*(w-y)*T/T\_max\_last)$$

zugewiesen wird, wobei
b, c, d Gewichtsfaktoren mit b+c+d=1 sind,
0>b,c,d>1,
FP-y ein für die gegebene Entfernung zwischen der sendenden Funkstation und der empfangenden Funkstation vorgegebener Wert für den Funkparameter und
FP-z ein für die gegebene Signalqualität eines von der sendenden Funkstation gesendeten und von der empfangenden Funkstation empfangenen Signals vorgegebener Wert für den Funkparameter ist,
FP-w der vorherige Wert des Funkparameters,
T_max_last die Maximalzeit,
T der zeitliche Abstand zwischen dem Ende der Übertragung des vorherigen Funkblocks und der Übertragung des weiteren Funkblocks ist.

**4.** Verfahren nach Anspruch 3, **dadurch gekennzeichnet, dass** die Gewichtsfaktoren zeitabhängig sind.

**5.** Verfahren nach einem der Ansprüche 1 bis 4, **dadurch gekennzeichnet, dass** am Ende der Übertragung des jeweiligen Funkblocks der aktuelle Wert des Funkparameters in Abhängigkeit der Entfernung zwischen der sendenden Funkstation und der empfangenden Funkstation gespeichert wird und bei dem jeweils aus dem aktuellen Wert des Funkparameters und dem gespeicherten vorgegebenen Wert des Funkparameters ein neuer vorgegebener Wert des Funkparameters für die gegebene Entfernung zwischen der sendenden Funkstation und der empfangenden Funkstation berechnet und gespeichert wird.

**6.** Verfahren nach Anspruch 5, **dadurch gekennzeichnet, dass** der neue vorgegebene Wert des Funkparameters durch Mittelwertbildung aus dem aktuellen Wert des Funkparameters und dem gespeicherten vorgegebenen Wert des Funkparameters berechnet wird.

**7.** Verfahren nach einem der Ansprüche 1 bis 6, **dadurch gekennzeichnet, dass** der Funkparameter zusätzlich in Abhängigkeit einer Funkzelle, in der sich die sendende Funkstation und/oder die empfangende Funkstation befindet, bestimmt wird.

**8.** Verfahren nach einem der Ansprüche 1 bis 7, **dadurch gekennzeichnet, dass** die Verwaltung des Wertes für den Funkparameter in einem Operations- und Wartungszentrum des Funkkommunikationssystems erfolgt.

**9.** Verfahren nach einem der Ansprüche 1 bis 8, **dadurch gekennzeichnet, dass** der Funkparameter ein Modulations- und Codierschema, ein Parameter zur Sendeleistungsregelung, ein Parameter zur Steuerung einer richtungsselektiven und/oder adaptiven Antenne und/oder eine netzwerkgesteuerte Neuauswahl von Funkaellen ist.

**10.** Verfahren nach einem der Ansprüche 1 bis 9, **dadurch gekennzeichnet, dass** der Funkparameter während der Übertragung der zeitlich begrenzten Funkblöcke eines Paketdatenflusses in Abhängigkeit des Empfangspegels und/oder der Qualität der Datenübertragung angepasst wird.

**11.** Verfahren nach Anspruch 10, **dadurch gekennzeichnet,**

- **dass** die Qualität der Datenübertragung anhand von Messwerten beurteilt wird, die auf Anforderung des Funkkommunikationsnetzes von der empfangenden Funkstation gesendet werden, und
- **dass** der zeitliche Abstand zwischen der Anforderung der Messwerte veränderlich ist.

**12.** Verfahren nach Anspruch 11, **dadurch gekennzeichnet, dass** die Anforderung der Messwerte zu Beginn der Datenübertragung häufiger als zu Ende der Datenübertragung erfolgt.

**13.** Verfahren nach Anspruch 11 oder 12, **dadurch gekennzeichnet, dass** der funktionale Zusammenhang des zeitlichen Abstands zwischen den Anforderungen mathematisch beschreibbar ist.

## Claims

**1.** Method for packet-switched data transmission in a multi-cell radio communication network,

- in the case of which a packet data flow between a transmitting radio station and a receiving radio station in the form of consecutive time-limited radio blocks is transmitted,
- in the case of which for the transmission of a first time-limited radio block at least one radio parameter is determined as a function of the signal quality of a signal transmitted from the transmitting radio station and the signal received from the receiving radio station,

**characterized in that**,

- for the transmission of the first radio block, at least one of the radio parameters is also determined depending on a distance between the transmitting radio station and the receiving radio station,
- for the transmission of additional packet data flows with additional time-limited radio blocks, at least one radio parameter is established in each case depending on the distance between a transmitting radio station and a receiving radio station and a signal quality of a signal transmitted from the transmitting radio station and a signal received from the receiving radio station as well as depending on a preceding value of the radio parameter during transmission of a preceding time-limited packet data flow, provided that the time-limited interval between the end of the preceding transmission and the actual transmission does not exceed a specified maximum time, and
- the influence of the preceding value of the radio parameter with a time interval increasing between the last transmission of the preceding packet data flow and the new packet data flow decreases.

**2.** Method according to claim 1, **characterized in that** the decreasing influence of the preceding value can be described by means of a mathematical equation.

**3.** Method according to claim 2, **characterized in that**

- for the radio parameter n values with the designation FP-x, x=1,...,n are available,
- if the time interval between the end of the transmission of the preceding packet data flow and the transmission of additional packet data flows exceeds the maximum period, the value FP-x is assigned to the radio parameter with x

$$x=\text{Integer}(a*y+(1-a)*z)$$

in which case a is a weight factor with 0>a>1,

FP-y is a value for the radio parameter specified for the given distance between the transmitting radio station and the receiving radio station and

FP-z is a value for the radio parameter specified for the given signal quality of a signal transmitted from the transmitting radio station and a signal received from the receiving radio station, and

- if the time interval between the end of the transmission of the preceding radio block and the transmission of the further radio block is less than the maximum period, the value FP-x is assigned to the radio parameter with

$$x=Integer(b*y+c*z+d*(w-y)*T/T\_max\_last)$$

in which case

b, c, d are weight factors with b+c+d=1,

$0>b,c,d>1$,

FP-y is a value for the radio parameter specified for the given distance between the transmitting radio station and the receiving radio station and

FP-z is a value for the radio parameter specified for the given signal quality of a signal transmitted from the transmitting radio station and a signal received from the receiving radio station,

FP-w is the preceding value of the radio parameter,

T_max_last is the maximum time,

T is the time interval between the end of the transmission of the preceding radio block and the transmission of the additional radio block.

4. Method according to claim 3, **characterized in that** the weight factors are time-specific.

5. Method according to one of the claims 1 to 4, **characterized in that** at the end of the transmission of the specific radio block, the actual value of the radio parameter is stored depending on the distance between the transmitting radio station and the receiving radio station and as a result, from the actual value of the radio parameter and the stored specified value of the radio parameter, a newly specified value of the radio parameter for the given distance between the transmitting radio station and the receiving radio station is calculated and stored in each case.

6. Method according to claim 5, **characterized in that** the newly specified value of the radio parameter is calculated by forming the average from the actual value of the radio parameter and the stored specified value of the radio parameter.

7. Method according to one of the claims 1 to 6, **characterized in that** the radio parameter is also determined depending on the radio cell in which the transmitting radio station and/or the receiving radio station is found.

8. Method according to one of the claims 1 to 7, **characterized in that** the value for the radio parameter is administered in an operation and maintenance centre of the radio communications network.

9. Method according to one of the claims 1 to 8, **characterized in that** the radio parameter is a modulation and coding scheme, a parameter for the power control, a parameter for controlling a directional-selective and/or adaptive antenna and/or a network control cell reselection.

10. Method according to one of the claims 1 to 9, **characterized in that** during the transmission of the time-limited radio blocks of a packet data flow, the radio parameter adapts depending on the receiving level and/or the quality of the data transmission.

11. Method according to claim 10, **characterized in that**

- the quality of the data transmission is evaluated on the basis of the measured values that are transmitted by the receiving radio station on the request of the radio communication network, and
- that the time-interval between requesting the measured values can be changed.

12. Method according to claim 11, **characterized in that** the measured values are requested more frequently at the start of the data transmission than at the end of the data transmission.

13. Method according to claim 11 or 12, **characterized in that** the functional relation of the time interval between the requests can be described mathematically.

**Revendications**

1. Procédé pour la transmission de données par paquets dans un système de communication radio qui compte plusieurs cellules radio,

   - dans lequel un flux de paquets de données entre un poste radio émetteur et un poste radio récepteur est transmis sous la forme de blocs radio successifs limités dans le temps,
   - dans lequel, pour la transmission d'un premier bloc radio limité dans le temps, on détermine au moins un paramètre radio en fonction de la qualité de signal d'un signal envoyé par le poste radio émetteur et reçu par le poste radio récepteur,

   **caractérisé en ce que**

   - le paramètre radio, au moins un, pour la transmission du premier bloc radio est de plus déterminé en fonction de la distance entre le poste radio émetteur et le poste radio récepteur,
   - **en ce que** pour la transmission d'autres flux de paquets de données qui contiennent d'autres blocs radio limités dans le temps, la détermination du paramètre radio, au moins un, s'effectue chaque fois en fonction de la distance entre le poste radio émetteur et le poste radio récepteur et en fonction de la qualité de signal d'un signal envoyé par le poste radio émetteur et reçu par le poste radio récepteur et en fonction d'une valeur précédente du paramètre radio lors de la transmission d'un bloc radio précédent limité dans le temps d'un flux précédent de paquets de données, pour autant que l'écart temporel entre la fin de la transmission précédente et la transmission en cours ne dépasse une durée maximale prédéterminée et
   - **en ce que** l'influence de la valeur précédente du paramètre radio diminue lorsque la distance temporelle entre la transmission du bloc radio précédent du flux précédent de paquets de données et de l'autre bloc radio du nouveau flux de paquets de données diminue.

2. Procédé selon la revendication 1, **caractérisé en ce que** la diminution de l'influence de la valeur précédente peut être décrite par une équation mathématique.

3. Procédé selon la revendication 2, **caractérisé en ce que**:

   - pour le paramètre radio, on dispose de n valeurs désignées par FP-x avec x = 1, ..., n,
   - **en ce qu'**au cas où l'écart temporel entre la fin de la transmission du bloc radio précédent du dernier flux de paquets de données et la transmission de l'autre bloc radio du nouveau flux de paquets de données est supérieure à la durée maximale, le paramètre radio reçoit la valeur FP-x avec x:

$$x = Entier(a*y+(1-a)*z),$$

   dans laquelle:

   a est un facteur de pondération, 0 > a > 1,
   FP-y est une valeur du paramètre radio prédéterminée pour la distance donnée entre le poste radio émetteur et le poste radio récepteur et
   FP-z est une valeur prédéterminée du paramètre radio pour la qualité donnée du signal envoyé par le poste radio émetteur et reçu par le poste radio récepteur et

   - **en ce qu'**au cas où l'écart temporel entre la fin de la transmission du bloc radio précédent et la transmission de l'autre bloc radio est inférieure à la durée maximale, le paramètre radio reçoit la valeur FP-x avec

$$x = Entier(b*y+c*z+c*(w-y)*T/T\_max\_last)$$

   dans laquelle
   b, c, d sont des facteurs de pondération, avec b + c + d = 1,

0 > b, c, d > 1,
FP-y étant une valeur prédéterminée du paramètre radio pour la distance donnée entre le poste radio émetteur et le poste radio récepteur,
FP-z étant une valeur prédéterminée du paramètre radio pour la qualité donnée du signal émis par le poste radio émetteur et reçu par le poste radio récepteur,
FP-w étant la valeur précédente du paramètre radio,
T_max_last étant la durée maximale et
T étant l'écart temporel entre la fin de la transmission du bloc radio précédent et la transmission de l'autre bloc radio.

4. Procédé selon la revendication 3, **caractérisé en ce que** les facteurs de pondération dépendent du temps.

5. Procédé selon l'une des revendications 1 à 4, **caractérisé en ce qu'**à la fin de la transmission de chaque bloc radio, la valeur en cours du paramètre radio qui dépend de la distance entre le poste radio émetteur et le poste radio récepteur est mémorisée, une nouvelle valeur prédéterminée du paramètre radio pour la distance donnée entre le poste radio émetteur et le poste radio récepteur étant calculée à partir de la valeur en cours du paramètre radio et de la valeur prédéterminée du paramètre radio mémorisée, et étant mémorisée.

6. Procédé selon la revendication 5, **caractérisé en ce que** la nouvelle valeur prédéterminée du paramètre radio est calculée par calcul de la moyenne de la valeur actuelle du paramètre radio et de la valeur prédéterminée du paramètre radio mémorisée.

7. Procédé selon l'une des revendications 1 à 6, **caractérisé en ce que** le paramètre radio est de plus déterminé en fonction d'une cellule radio dans laquelle le poste radio émetteur et/ou le poste radio récepteur se trouvent.

8. Procédé selon l'une des revendications 1 à 7, **caractérisé en ce que** l'administration de la valeur du paramètre radio s'effectue dans un centre d'opération et de maintenance du système de télécommunication radio.

9. Procédé selon l'une des revendications 1 à 8, **caractérisé en ce que** le paramètre radio est un schéma de modulation et de codage, un paramètre de régulation de la puissance d'émission, un paramètre de commande d'une antenne sélective en direction et/ou d'une antenne adaptative et/ou avec sélection nouvelle, contrôlée par le réseau, de cellules radio.

10. Procédé selon l'une des revendications 1 à 9, **caractérisé en ce que** le paramètre radio est adapté pendant la transmission des blocs radio limités dans le temps d'un flux de paquets de données en fonction du niveau de réception et/ou de la qualité de la transmission des données.

11. Procédé selon la revendication 10, **caractérisé en ce que** la qualité de la transmission des données est évaluée à l'aide des valeurs de mesure qui sont envoyées par le poste radio récepteur à la demande du réseau de communication radio et

   - **en ce que** l'écart temporel peut être modifié entre la demande des valeurs de mesure.

12. Procédé selon la revendication 11, **caractérisé en ce que** la demande de valeur de mesure s'effectue plus fréquemment au début de la transmission de données qu'à la fin de la transmission des données.

13. Procédé selon les revendications 11 ou 12, **caractérisé en ce que** la relation fonctionnelle de l'écart temporel entre les demandes peut être décrite mathématiquement.

FIG 1

FIG 2

$T\_start$  $B*T\_start$  $B^{i-1}*T\_start$  $T\_max$  $T\_max$

PAS  ASS  POS1  POS2  POS3  POS4  POS5  POS6  POS7  POS8  POS9

DL  DL TBF

t

EP 1 405 451 B1

FIG 3

$N \times T\_start$  $M \times T\_max$  $N \times T\_start$

PAS  ASS

DL  DL TBF

t